# FASCICULE DE BREVET EUROPEEN

(11) **EP 2 528 758 B1**
(45) Date de publication et mention de la délivrance du brevet: **17.05.2017**
(21) Numéro de dépôt: 11701140.3
(22) Date de dépôt: 27.01.2011
(51) Int. Cl.: B60H 1/00

(54) **SYSTEME DE CHAUFFAGE, VENTILATION ET/OU CLIMATISATION, NOTAMMENT POUR UN VEHICULE AUTOMOBILE ELECTRIQUE**
ERHITZUNGS-, BELÜFTUNGS- UND/ODER KLIMAANLAGENSYSTEM, INSBESONDERE FÜR EIN ELEKTRISCHES AUTOMOBIL
HEATING, VENTILATION AND/OR AIR CONDITIONING SYSTEM, IN PARTICULAR FOR AN ELECTRIC AUTOMOBILE VEHICLE

(30) Priorité: 29.01.2010 FR 1000370
(43) Date de publication de la demande: 05.12.2012
(73) Titulaire: Valeo Systemes Thermiques, 78320 Le Mesnil-Saint-Denis (FR)
(72) Inventeur: ALMORI, Armelle, F-78322 Le Mesnil Saint-Denis cédex (FR); PIERRES, Philippe, F-78322 Le Mesnil Saint-Denis cédex (FR)
(74) Mandataire: Metz, Gaëlle
(86) Numéro de dépôt international: PCT/EP2011/051167
(87) Numéro de publication internationale: WO 2011/092258

(56) Documents cités:
- EP-A1- 2 075 873
- FR-A1- 2 865 435
- US-A- 5 490 572
- US-A1- 2009 071 178

## Description

La présente invention concerne un système de chauffage, ventilation et/ou climatisation pour la distribution d'un flux d'air, notamment pour un véhicule automobile électrique.

L'invention trouve une application particulièrement avantageuse dans le domaine de la régulation en température de batteries agencées dans des véhicules automobiles électriques.

Dans les véhicules automobiles électriques, la source d'énergie assurant la propulsion du véhicule est assurée par une batterie ou un groupe de batteries. Compte tenu des fortes intensités de courant demandées, la batterie ou le groupe de batteries est le siège de phénomènes thermiques importants qui doivent être maîtrisés.

En particulier, la température des batteries ne doit pas dépasser une valeur maximale au-delà de laquelle elles risquent de se détériorer, voire de se détruire. D'autre part, pour chaque type de batterie, il existe une plage de température de fonctionnement optimal à l'intérieur de laquelle la température des batteries doit de préférence être maintenue. En effet, si la température est trop basse, le courant délivré peut s'avérer insuffisant, tandis que si elle est trop élevée, les batteries ont tendance à se décharger et à s'user.

Il est donc nécessaire de prévoir dans les véhicules automobiles électriques des moyens permettant d'assurer la régulation thermique des batteries, en particulier de maintenir la température des batteries à l'intérieur de la plage de fonctionnement optimal.

Actuellement, les moyens connus comprennent un système de régulation thermique à circulation de fluide caloporteur. A titre d'exemple, il est possible d'envisager une circulation d'un flux d'air généré par un ventilateur, une circulation d'eau, notamment du type de celle utilisée pour assurer le refroidissement des moteurs thermiques, ou encore une circulation d'un fluide réfrigérant, notamment du type de ceux mis en oeuvre dans les circuits de climatisation, par exemple le fluide frigorigène connu sous l'appellation R134A, fréon, etc.

Le système de régulation thermique est commandé par une unité de gestion des batteries qui délivre un signal de commande à des actionneurs du système de régulation thermique à chaque fois qu'il est nécessaire de réguler la température des batteries, c'est-à-dire que les refroidir ou de les réchauffer, en particulier afin de ramener la température des batteries dans la plage de fonctionnement optimal.

Les systèmes de régulation thermique connus sont des systèmes autonomes, dédiés à la seule fonction de régulation thermique des batteries. Ils sont indépendants de tout autre circuit thermique pouvant exister dans les véhicules, notamment le circuit de climatisation. US 2009/0071178 divulgue un système de chauffage, ventilation et/ou climatisation, notamment pour un véhicule automobile électrique selon le préambule de la revendication 1. Il en résulte que, pour réaliser la fonction de régulation thermique, il faut dégager un espace suffisant pour pouvoir installer le système de régulation thermique dédié aux batteries. Ceci entraîne un encombrement supplémentaire dans la zone de stockage des batteries, en particulier lorsque les batteries sont stockées sous le capot, auquel s'ajoute un surcoût lié aux composants qui doivent être développés spécifiquement pour le système de régulation thermique lui-même.

Aussi, un but de l'invention est de proposer un système de chauffage, ventilation et/ou climatisation permettant d'assurer un échange thermique de régulation avec les batteries, sans une augmentation importante de l'encombrement et du coût.

Ce but est atteint, conformément à l'invention, grâce à un système de chauffage, ventilation et/ou climatisation d'un véhicule automobile, comprenant un boîtier de chauffage, ventilation et/ou climatisation apte à permettre le traitement thermique d'un flux d'air de climatisation destiné à maintenir une température désirée à l'intérieur de l'habitacle, le boîtier de chauffage, ventilation et/ou climatisation comportant des moyens principaux de distribution de l'air de climatisation à l'intérieur de l'habitacle du véhicule afin de définir un nombre limité de configurations de distribution. Plus particulièrement, le système de chauffage, ventilation et/ou climatisation comprend un module additionnel comportant des moyens additionnels de distribution du flux d'air de climatisation hors de l'habitacle.

Ainsi, on comprend que l'invention crée au moins une sortie supplémentaire du flux d'air de climatisation venant s'ajouter aux sorties existantes du système de chauffage, ventilation et/ou climatisation, dédiées à la seule climatisation de l'habitacle, cette sortie supplémentaire étant destinée à assurer un échange thermique entre le flux d'air de climatisation et des composants du véhicule placés hors de l'habitacle, notamment les batteries d'un véhicule électrique.

Dans cette dernière application, le système de régulation thermique des batteries se trouve alors considérablement simplifié puisqu'il n'est nul besoin de prévoir des moyens particuliers pour la mise en oeuvre d'un fluide caloporteur spécifique. En effet, le fluide utilisé par l'invention pour réguler la température des batteries n'est autre que le flux d'air de climatisation produit par ailleurs pour maintenir le confort de l'habitacle. Il suffit alors simplement de dirigerla sortie des moyens additionnels de distribution du système de chauffage, ventilation et/ou climatisation selon l'invention vers les batteries.

Il découle, de cette simplification, un encombrement limité du système de régulation thermique et un moindre coût.

Selon un mode de réalisation de l'invention, le système de chauffage, ventilation et/ou climatisation comporte des moyens de commande aptes à commander les moyens principaux de distribution et les moyens additionnels de distribution de manière à, simultanément ou consécutivement, fermer la distribution du flux d'air de climatisation à l'intérieur de l'habitacle et ouvrir la distribution du flux d'air de climatisation hors de l'habitacle, et inversement.

On obtient, de cette manière, une totale indépendance entre les deux modes de distribution du flux d'air de climatisation assurés par le système de chauffage, ventilation et/ou climatisation, conformément à l'invention, consistant en, d'une part, la distribution du flux d'air de climatisation à l'intérieur de l'habitacle et, d'autre part, la distribution du flux d'air de climatisation hors de l'habitacle, par exemple vers les batteries du véhicule.

En particulier, lorsque la distribution du flux d'air de climatisation hors de l'habitacle est fermée, la distribution du flux d'air de climatisation à l'intérieur de l'habitacle peut s'effectuer de la manière dont elle s'effectue habituellement, via les moyens principaux de distribution, sur tous les véhicules, qu'ils soient à propulsion électrique ou thermique, sans aucune modification liée à la présence des moyens additionnels de distribution.

Cette observation permet d'envisager un mode de réalisation particulièrement avantageux dans lequel le système de chauffage, ventilation et/ou climatisation selon l'invention est constitué, d'une part, d'un boîtier principal comprenant les moyens principaux de distribution du flux d'air de climatisation à l'intérieur de l'habitacle, et, d'autre part, d'un module additionnel rapporté sur le boîtier principal, comprenant les moyens additionnels de distribution du flux d'air de climatisation hors de l'habitacle.

Dans ce contexte, le système de chauffage, ventilation et/ou climatisation, objet de l'invention, se présente comme un ensemble modulaire de deux éléments distincts, à savoir, d'une part, un boîtier principal, qui est semblable au boîtier de traitement thermique d'air de climatisation dédié à la distribution du flux d'air de climatisation à l'intérieur de l'habitacle, que l'on trouve installé à demeure dans les véhicules climatisés, et, d'autre part, un module additionnel, qui peut être intégré au boîtier principal en option dans le cas des véhicules électriques afin d'assurer la régulation de la température des batteries. Ainsi, le boîtier principal constitue un élément de base qui peut être utilisé seul pour les véhicules à propulsion thermique et sur lequel peut être rapporté le module additionnel pour les véhicules à propulsion électrique.

Le système de chauffage, ventilation et/ou climatisation selon l'invention permet donc d'installer le module additionnel sans modification substantielle du boîtier principal, ni dans sa structure ni dans ses fonctions. En particulier, lorsque le module additionnel n'est pas mis en oeuvre pour réguler la température des batteries, le boîtier principal fonctionne de la même manière qu'en l'absence de module additionnel. Inversement, lors des périodes où il s'avère nécessaire de réguler la température des batteries, tout ou partie du flux d'air de climatisation produit par le boîtier principal du système de chauffage, ventilation et/ou climatisation est dirigé vers les batteries via le module additionnel.

Dans un mode de réalisation particulier, le module additionnel comprend au moins une conduite additionnelle de sortie d'air de climatisation hors de l'habitacle du véhicule.

Avantageusement, le boîtier de chauffage, ventilation et/ou climatisation comprend au moins une section de sortie principale d'air de climatisation vers l'habitacle. Dans cette configuration, la conduite additionnelle de sortie communique avec la section de sortie principale d'air de climatisation vers l'habitacle.

Ainsi, les moyens additionnels de distribution sont aptes à diriger le flux d'air de climatisation sortant à travers la section de sortie principale vers la conduite additionnelle et/ou vers au moins un diffuseur débouchant dans l'habitacle.

Par ailleurs, les moyens principaux de distribution sont aptes à commander l'ouverture et/ou la fermeture de la section de sortie principale. Plus particulièrement, selon un mode de réalisation préférentiel, la section de sortie principale d'air de climatisation vers l'habitacle est une section de sortie centrale. Dans cet agencement particulier, la conduite additionnelle de sortie communique avec la section de sortie centrale.

La présente invention consiste donc, avantageusement, en ce que le système de chauffage, ventilation et/ou climatisation comprend des moyens de commande propres à agencer les moyens principaux de distribution dans une configuration de distribution donnée et les moyens additionnels de distribution dans une position d'ouverture de la distribution du flux d'air de climatisation hors de l'habitacle.

De façon préférentielle, le boîtier de chauffage, ventilation et/ou climatisation comprend également au moins une section de sortie de pied. La configuration de distribution donnée est alors telle que les moyens principaux de distribution sont aptes à fermer la section de sortie de pied et à ouvrir la section de sortie centrale.

De plus, le boîtier de chauffage, ventilation et/ou climatisation comprend au moins une section de sortie latérale. La configuration de distribution donnée est telle que les moyens principaux de distribution sont aptes à ouvrir la section de sortie latérale et en ce que les moyens additionnels de distribution sont aptes à fermer la section de sortie latérale.

La présente invention trouve une application particulière dans le refroidissement des batteries des véhicules automobiles électriques.

La présente invention sera mieux comprise et d'autres caractéristiques et avantages apparaîtront encore à la lecture de la description détaillée qui suit comprenant des exemples de réalisation, non limitatifs, donnés à titre illustratif en référence avec les figures annexées qui pourront servir à compléter la compréhension de la présente invention, l'exposé de sa réalisation et, le cas échéant, contribuer à sa définition, sur lesquels :
- la figure 1 est une vue en perspective d'un boîtier d'un système de chauffage, ventilation et/ou climatisation conforme à l'invention,
- la figure 2 est une vue en perspective d'un module additionnel d'un système de chauffage, ventilation et/ou climatisation conforme à l'invention,
- la figure 3 est une vue en perspective d'un système de chauffage, ventilation et/ou climatisation conforme à l'invention constitué du module additionnel de la figure 2 rapporté sur le boîtier de la figure 1, et
- la figure 4 est une vue en coupe médiane du système de chauffage, ventilation et/ou climatisation de la figure 3.

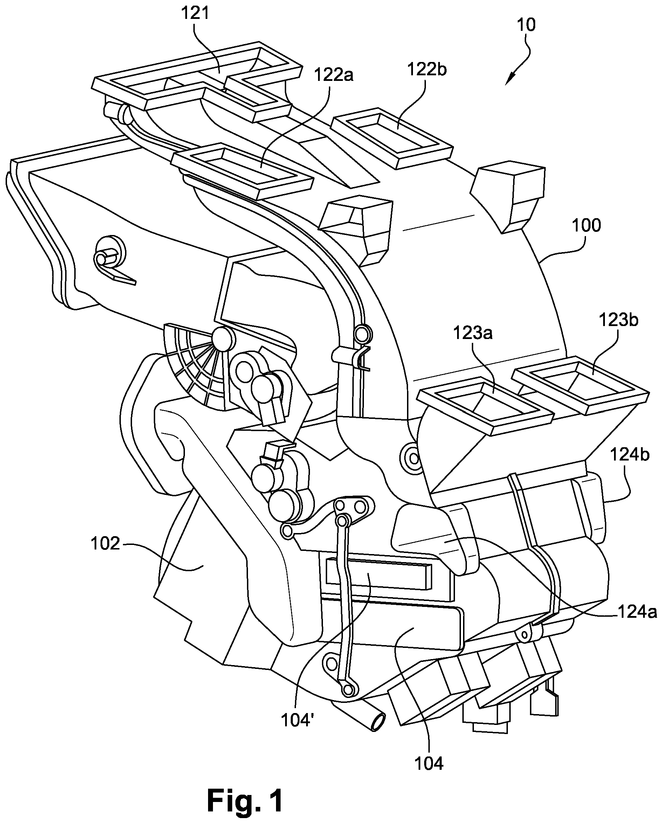

Sur la figure 1, est représenté un système de chauffage, ventilation et/ou climatisation 10 comprenant un boîtier de chauffage, ventilation et/ou climatisation 100. Le système de chauffage, ventilation et/ou climatisation 10 est du type de ceux que l'on peut trouver habituellement dans les installations de chauffage, ventilation et/ou climatisation de l'habitacle des véhicules à propulsion thermique. Dans la suite de la description, le boîtier de chauffage, ventilation et/ou climatisation 100 sera également identifié en tant que boîtier principal 100.

Le boîtier principal 100 comporte des composants classiques aptes à traiter thermiquement un flux d'air de climatisation destiné à maintenir une température désirée à l'intérieur de l'habitacle. Notamment, le boîtier principal 100 comporte un pulseur d'air 101, un évaporateur 102, au moins un radiateur 104. De plus, le boîtier principal 100 comporte une chambre de mixage d'air 103 permettant le mélange d'un flux d'air chaud C et d'un flux d'air froid F afin d'obtenir un flux d'air à température désirée apte à être distribué à l'intérieur de l'habitacle. Le boîtier principal 100 peut également comporter des composants additionnels tels qu'un filtre (non représenté), un radiateur de chauffage additionnel 104', etc.

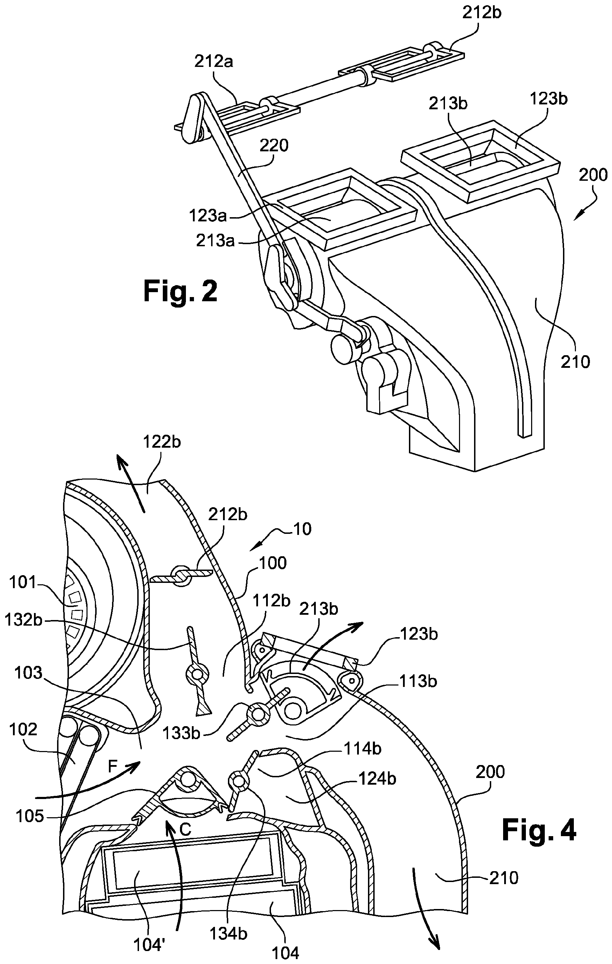

Les composants sont visibles sur la figure 4 qui présente le pulseur d'air 101 produisant un flux d'air, provenant de l'extérieur du véhicule et/ou de l'intérieur de l'habitacle, canalisé en direction de l'évaporateur 102, à la traversé duquel le flux d'air est refroidi et déshumidifié afin de produire le flux d'air froid F. Une partie du flux d'air froid F est dirigée directement vers la chambre de mixage d'air 103, tandis qu'une autre partie du flux d'air froid F est dirigée vers des composants chauffants tels que le radiateur 104, afin de produire le flux d'air chaud C. Le flux d'air chaud C rejoint le flux d'air froid F dans la chambre de mixage d'air 103.

La température du flux d'air mélangé dans la chambre de mixage d'air 103 dépend des proportions du flux d'air froid F et du flux d'air chaud C provenant respectivement de l'évaporateur 102 et du radiateur 104 entrant dans la chambre de mixage d'air 103. Afin de permettre à l'utilisateur d'ajuster la température du flux d'air de climatisation à la valeur désirée, il est prévu, dans le boîtier principal 100, au moins un volet de mixage 105, selon l'exemple de réalisation de type "tambour", mobile en rotation de manière à faire varier la proportion du flux d'air chaud C dans la chambre de mixage d'air 103 de 0% à 100% et, inversement, la proportion du flux d'air froid F dans la chambre de mixage d'air 103 de 100% à 0%. Selon l'exemple présenté en figure 4, le volet de mixage 105 est dans une position, dite "tout froid", dans laquelle la chambre de mixage 105 est alimentée par 100% du flux d'air froid F et 0% du flux d'air chaud C. Dans le cadre de la présente invention, le volet de mixage 105 n'est pas limitée à un volet de type "tambour" et peut prendre d'autres formes.

Outre les composants de traitement thermique proprement dit, le boîtier principal 100 comprend des moyens principaux de distribution de l'air de climatisation sortant de la chambre de mixage d'air 103 dans le but de répartir le flux d'air à température désirée à l'intérieur de l'habitacle, en diverses zones, en fonction des besoins des occupants du véhicule.

Selon l'exemple préférentiel de réalisation présenté sur la figure 1, le boîtier principal 100 comprend des diffuseurs à travers lesquels le flux d'air de climatisation peut déboucher hors du boîtier principal 100 pour pénétrer dans l'habitacle. On distingue, notamment,
- un diffuseur de dégivrage 121, dirigé vers le pare-brise du véhicule,
- des diffuseurs d'habitacle, comprenant des diffuseurs latéraux 122a et 122b et des diffuseurs centraux 123a et 123b, dirigés respectivement vers les zones latérales et centrales de l'habitacle du véhicule, et
- des diffuseurs de pieds 124a et 124b, dirigés vers les zones inférieures de l'habitacle du véhicule.

Avantageusement, les diffuseurs latéraux 122a et 122b, les diffuseurs centraux 123a et 123b et les diffuseurs de pieds 124a et 124b sont disposés symétriquement par rapport au plan médian du boîtier principal 100. De plus, il est également souhaitable que le diffuseur de dégivrage 121 soit agencé dans une position médiane sur le boîtier principal 100 et/ou agencé de façon symétrique par rapport au plan médian du boîtier principal 100.

Selon l'exemple de réalisation présenté, le boîtier principal 100 comporte deux diffuseurs latéraux 122a et 122b, deux diffuseurs centraux 123a et 123b et deux diffuseurs de pieds 124a et 124b. Toutefois, la présente invention couvre également les agencements comportant un nombre différent de diffuseurs latéraux, de diffuseurs centraux et de diffuseurs de pieds.

La répartition entre les différents diffuseurs du flux d'air de climatisation en aval de la chambre de mixage d'air 103 est réalisée à travers des sections de sortie principales communiquant avec les différents diffuseurs.

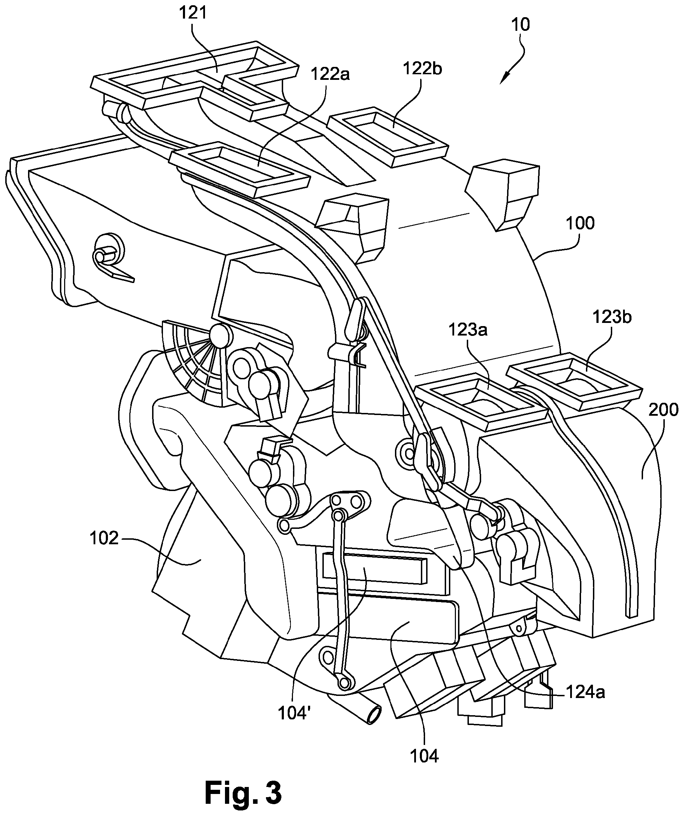

La figure 4 est vue en coupe médiane du système de chauffage, ventilation et/ou climatisation de la figure 3. Elle présente une section de sortie latérale 112b communiquant avec le diffuseur latéral 122b, une section de sortie centrale 113b communiquant avec le diffuseur central 123b et une section de sortie de pied 114b communiquant avec le diffuseur de pied 124b.

Par ailleurs, le boîtier principal 100 selon la présente invention est agencé de façon symétrique par rapport à un plan médian. En conséquence, le boîtier principal 100 comporte également, une section de sortie latérale 112a communiquant avec le diffuseur latéral 122a, une section de sortie centrale 113a communiquant avec le diffuseur central 123a et une section de sortie de pied 114a communiquant avec le diffuseur de pied 124a, non représentées sur la figure 4.

Le boîtier principal 100 comporte également une section de sortie principale de dégivrage communiquant avec le diffuseur de dégivrage 121, non visible sur la figure 4.

Le passage du flux d'air de climatisation à travers les sections de sortie latérale 112a et 112b, les sections de sortie centrale 113a et 113b, et les sections de sortie de pied 114a et 114b est commandé par des moyens d'obturation principaux. Préférentiellement, sans être toutefois limitatif, les moyens d'obturation principaux sont constitués par des volets de type "papillon".

Sur la figure 4, sont représentés des moyens principaux de distribution de l'air de climatisation constitués par des volets principaux d'obturation 132b, 133b et 134b permettant d'ouvrir ou de fermer la circulation du flux d'air de climatisation respectivement vers le diffuseur latéral 122b, le diffuseur central 123b et le diffuseur de pied 124b.

De même, par symétrie, le boîtier principal 100 comporte des moyens principaux de distribution de l'air de climatisation constitués par des volets principaux d'obturation 132a, 133a et 134a permettent d'ouvrir ou de fermer la circulation du flux d'air de climatisation respectivement vers le diffuseur latéral 122a, le diffuseur central 123a et le diffuseur de pied 124a, non représentées sur la figure 4.

La position ouverte ou fermée des volets principaux d'obturation 132a, 133a et 134a est déterminée par une cinématique reliant les volets principaux d'obturation 132a, 133a et 134a entre eux de manière à définir un nombre limité de configurations types de distribution parmi lesquelles l'utilisateur peut choisir celle qui lui convient pour maintenir le niveau de confort souhaité à l'intérieur de l'habitacle.

Dans la description qui va être faite, seuls seront mentionnés les volets principaux d'obturation visibles sur la figure 4, c'est-à-dire les volets principaux d'obturation 132b, 133b et 134b. Bien évidemment, les volets principaux d'obturation 132a, 133a et 134a occupent également diverses positions d'ouverture et de fermeture. Ainsi, les sections de sortie latérale 112a et 112b, les sections de sortie centrale 113a et 113b, et les sections de sortie de pied 114a et 114b sont respectivement commandées par des paires de volets principaux d'obturation 132a-132b, 133a-133b et 134a-134b.

Selon l'agencement des diverses configurations envisagées du système de chauffage, ventilation et/ou climatisation 10, chaque volet principal d'une paire de volets principaux peut être déplacé indépendamment ou en coordination avec l'autre volet de la même paire de volets principaux. En particulier, les agencements et le nombre de volets principaux peuvent être liés au type de système de chauffage, ventilation et/ou climatisation 10 désiré, qu'il soit du type "mono-zone", "bi-zone" ou "multi-zone".

La figure 4 montre un exemple de configuration des volets principaux d'obturation dite "aération habitacle" dans laquelle les volets principaux d'obturation 132b et 133b, commandant respectivement le diffuseur latéral 122b, le diffuseur central 123b sont en position d'ouverture permettant la sortie du flux d'air de climatisation vers l'habitacle par la section de sortie latérale 112b et la section de sortie centrale 113b et les diffuseurs correspondants, le diffuseur de dégivrage 121 et le volet principal d'obturation 134b commandant la section de sortie de pied 114b communiquant avec le diffuseur de pied 124b en position de fermeture, le diffuseur de pied 124b n'étant pas alimentés en air de climatisation.

Dans le cas où des composants du véhicule se trouvant hors de l'habitacle doivent être refroidis ou réchauffés, tels que les batteries servant à la propulsion des véhicules électriques, le système de chauffage, ventilation et/ou climatisation 10 selon l'invention comprend le boîtier principal 100 sur lequel est rapporté un module additionnel 200 comportant des moyens additionnels de distribution du flux d'air de climatisation hors de l'habitacle.

La figure 2 est une vue en perspective d'un module additionnel 200 d'un système de chauffage, ventilation et/ou climatisation de climatisation 10 selon la présente invention. Ainsi, la figure 3 montre le système de chauffage, ventilation et/ou climatisation 10 constitué du boîtier principal 100 tel que présenté sur la figure 1 sur lequel est assemblé le module additionnel 200 tel que présenté de la figure 2.

Comme le montre plus précisément la figure 4, le module additionnel 200 comprend une conduite additionnelle de sortie 210 du flux d'air de climatisation hors de l'habitacle. La conduite additionnelle de sortie 210 communique avec la section de sortie centrale 113b en liaison avec le diffuseur central 123b. Ainsi agencée, la conduite additionnelle de sortie 210 est alimentée à travers la section de sortie centrale 113b par le flux d'air de climatisation provenant de la chambre de mixage 103. Selon des variantes de réalisation, la conduite additionnelle de sortie 210 peut en communication avec une autre section de sortie du boîtier principal 100.

Afin de permettre le passage du flux d'air de climatisation de la chambre de mixage 103 vers la conduite additionnelle de sortie 210, le volet principal d'obturation 133b, commandant l'ouverture et la fermeture de la section de sortie centrale 113b, est en position ouverte.

De plus, le flux d'air de climatisation ne doit pas être diffusé à l'intérieur de l'habitacle par le diffuseur central 123b. Ainsi, il est nécessaire de prévoir un moyen d'obturation additionnel central 213b. Selon l'exemple de réalisation de la figure 4, le moyen d'obturation additionnel central 213b est réalisé en tant que volet de type "tambour". Le moyen d'obturation additionnel central 213b est apte à prendre deux positions extrêmes consistant en :
- d'une part, en une position de fermeture de la conduite additionnelle 210 pour un fonctionnement habituel du boîtier principal 100, et
- d'autre part, une position de fermeture du diffuseur central 123b, tel représenté sur la figure 4, pour un fonctionnement du module additionnel 200 afin de réguler la température des batteries.

De façon complémentaire, le moyen d'obturation additionnel central 213b peut prendre des positions intermédiaires entre la position de fermeture de la conduite additionnelle 210 et la position de fermeture du diffuseur central 123b.

Symétriquement, un moyen d'obturation additionnel central 213a, en particulier un volet de type "tambour" identique à celui représenté sur la figure 4, est disposé à l'entrée du diffuseur central 123a, ainsi que le montrent les figures 2 et 3.

Les positions d'ouverture et de fermeture des volets principaux d'obturation sont définies par une loi cinématique permettant de définir un nombre défini de configurations types de distribution. Compte tenu des agencements possibles des volets principaux d'obturation, il peut être nécessaire d'amener les volets principaux d'obturation 133a et 133b en liaison avec les diffuseurs de pied 124a et 124b en position ouverte. Par ailleurs, il peut également être nécessaire d'amener en position ouverte d'autres volets principaux, tel que le volet principal d'obturation 132b de circulation du flux d'air de climatisation vers le diffuseur latéral 122b à travers la section de sortie latérale 112b. Cette situation résulte du nombre limité de configurations de distribution. Dans l'exemple présenté, l'ouverture des volets principaux d'obturation 133a et 133b vers les diffuseurs centraux 123a et 123b ne peut se faire que dans le cadre de la configuration dite "aération habitacle" dans laquelle les volets principaux d'obturation 132a et 132b vers les diffuseurs latéraux 122a et 122b sont également ouverts.

Afin d'éviter une fuite d'air par les diffuseurs latéraux 122a et 122b, il est prévu un moyen d'obturation additionnel latéral 212b de la circulation du flux d'air de climatisation vers le diffuseur latéral 122b pouvant être amené en position fermée quand le volet principal d'obturation 132b est en position ouverte. La figure 2 montre un tel moyen d'obturation additionnel latéral 212b en liaison avec le module additionnel 200, ainsi que le moyen d'obturation additionnel latéral 212a agencé de façon symétrique.

L'intégration du module additionnel 200 au boîtier principal 100 s'effectue, par exemple, en démontant les diffuseurs centraux 123a et 123b présents sur le boîtier principal 100, tels que présentés sur la figure 1, puis en rapportant, sur le boîtier principal 100, le module additionnel 200 comportant des aérateurs centraux 123a et 123b, identiques à ceux initialement présents sur le boîtier principal 100.

Dans cette opération, les diffuseurs centraux 123a et 123b du module additionnel 200 prennent exactement la même position que ceux initialement prévus dans le boîtier principal 100, et les moyens d'obturation additionnels latéraux 212a et 212b sont mis en place dans les diffuseurs latéraux 122a et 122b en amont des volets principaux d'obturation 132a et 132b.

On se réfère dorénavant à la figure 3 qui consiste en une vue en perspective du système de chauffage, ventilation et/ou climatisation 10 conforme à l'invention constitué du module additionnel 200 de la figure 2 rapporté sur le boîtier principal 100 de la figure 1. Le système de chauffage, ventilation et/ou climatisation 10 de la figure 3 fonctionne de la façon suivante.

Selon la présente invention, une unité de gestion des batteries du véhicule, non représentée, est disposée afin de commander la régulation de température. Lorsque l'unité de gestion des batteries détermine que la régulation de température des batteries doit être effectuée, afin de les refroidir ou les réchauffer, une consigne est envoyée à un dispositif de commande du système de chauffage, ventilation et/ou climatisation 10 indiquant qu'une distribution du flux d'air de climatisation par le module additionnel 200 est requise et précisant une température de consigne pour le flux d'air de climatisation en sortie du module additionnel 200.

En réponse à la consigne reçue, le dispositif de commande du système de chauffage, ventilation et/ou climatisation 10 effectue alors deux actions. Une première action consiste à amener le volet de mixage 105 dans une position où les proportions du flux d'air chaud C et du flux d'air froid F envoyés dans la chambre de mixage 103 permettent d'obtenir la température de consigne imposée par l'unité de gestion des batteries.

Une deuxième action concerne les moyens de distribution proprement dits. Dans l'exemple particulier de réalisation du boîtier principal 100 présenté, le dispositif de commande du système de chauffage, ventilation et/ou climatisation 10 amène les volets principaux d'obturation 132b et 133b dédiés au diffuseur latéral 122b et au diffuseur central 123b du boîtier principal 100 dans une position correspondant à la configuration type "aération habitacle" de distribution principale, tandis que les moyens d'obturation additionnel latéral 212b est amené en position de fermeture et le moyen d'obturation additionnel central 213b est amené dans sa position d'obturation du diffuseur central 123b.

Selon un mode particulier de réalisation, la simultanéité de mouvements du moyen d'obturation additionnel latéral 212b et du moyen d'obturation additionnel central 213b est obtenue au moyen d'une bielle de couplage mécanique 220.

Quand la température des batteries a été ramenée à l'intérieur de la plage de fonctionnement optimal, l'unité de gestion des batteries envoie une consigne d'arrêt de la distribution additionnelle du flux d'air de climatisation par le module additionnel 200.

Le dispositif de commande du système de chauffage, ventilation et/ou climatisation 10 agence alors le moyen d'obturation additionnel latéral 212b en position d'ouverture et amène le moyen d'obturation additionnel central 213b dans la position d'obturation de la conduite additionnelle 210 pour un retour à la configuration "aération habitacle" de fonctionnement classique du boîtier principal 100.

Il faut également souligner que, si l'invention a été décrite dans le cadre d'une configuration dite "aération habitacle" où les volets principaux d'obturation des diffuseurs latéraux et centraux sont couplés à l'ouverture et à la fermeture, il serait possible de définir d'autres configurations types. Notamment, il est possible de prévoir une configuration où les seuls volets principaux d'obturation 133a et 133b dédiés aux diffuseurs centraux 123a et 123b seraient ouverts. Dans ce cas, les moyens d'obturation additionnels latéraux 212a et 212b ne seraient pas nécessaires.

Bien évidemment, la présente invention couvre également les modes de réalisation dans lesquels le dispositif de commande du système de chauffage, ventilation et/ou climatisation 10 amène, en tant que deuxième action, les volets principaux d'obturation 132b et 133b dédiés aux diffuseurs latéraux 122a et 122b du boîtier principal 100 dans une position correspondant à une configuration particulière, autre que la configuration dite "aération habitacle".

Il ressort donc de la présente invention que la fonction additionnelle de gestion thermique des batteries est simplifiée. Cette fonction ne requiert pas un mode complémentaire de distribution. En effet, le module additionnel 200 est superposé au boîtier principal 100 d'un système de chauffage, ventilation et/ou climatisation 10. De plus, la distribution d'un flux d'air dans le module additionnel 200 est obtenue en disposant les volets principaux d'obturation agencés dans le boîtier principal 100 dans une des configurations de distribution du flux d'air initialement prévue par le boîtier principal 100.

Par suite, la gestion particulière du flux d'air dans le module additionnel est assurée par des moyens d'obturation additionnels.

On remarque enfin que diverses mises en oeuvre peuvent être réalisées selon les principes de l'invention. Il doit être bien entendu toutefois que ces exemples de fonctionnement sont donnés à titre d'illustration de l'objet de l'invention. Bien évidemment, l'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

De plus, les différents modes de fonctionnement décrits précédemment peuvent être pris séparément ou en combinaison afin de réaliser des alternatives de réalisations et diverses configurations d'un système de chauffage, ventilation et/ou climatisation tel que défini selon la présente invention.

## Revendications

1. Système de chauffage, ventilation et/ou climatisation (10) d'un véhicule automobile, comprenant un boîtier de chauffage, ventilation et/ou climatisation (100) apte à permettre le traitement thermique d'un flux d'air de climatisation destiné à maintenir une température désirée à l'intérieur de l'habitacle, le boîtier de chauffage, ventilation et/ou climatisation (100) comportant des moyens principaux de distribution (132a, 132b, 133a, 133b, 134a, 134b) de l'air de climatisation à l'intérieur de l'habitacle du véhicule afin de définir un nombre limité de configurations de distribution,
le système de chauffage, ventilation et/ou climatisation (10) comprenant un module additionnel (200) comportant des moyens additionnels de distribution (212a, 212b, 213a, 213b) du flux d'air de climatisation hors de l'habitacle et le module additionnel (200) comprenant au moins une conduite additionnelle de sortie (210) d'air de climatisation hors de l'habitacle du véhicule, le boîtier de chauffage, ventilation et/ou climatisation (100) comprenant au moins une section de sortie principale (112a, 112b, 113a, 113b, 114a, 114b) d'air de climatisation vers l'habitacle, la conduite additionnelle de sortie (210) communiquant avec la section de sortie principale (112a, 112b, 113a, 113b, 114a, 114b) d'air de climatisation vers l'habitacle,
**caractérisé en ce que** les moyens additionnels de distribution (212a, 212b, 213a, 213b) sont aptes à diriger le flux d'air de climatisation sortant à travers la section de sortie principale (112a, 112b, 113a, 113b, 114a, 114b) vers la conduite additionnelle (210) et/ou vers au moins un diffuseur (122a, 122b, 123a, 123b, 124a, 124b) débouchant dans l'habitacle.

2. Système de chauffage, ventilation et/ou climatisation (10) selon la revendication 1, dans lequel les moyens principaux de distribution (132a, 132b, 133a, 133b, 134a, 134b) sont aptes à commander l'ouverture et/ou la fermeture de la section de sortie principale (112a, 112b, 113a, 113b, 114a, 114b).

3. Système de chauffage, ventilation et/ou climatisation (10) selon l'une quelconque des revendications 1 à 2, dans lequel la section de sortie principale d'air de climatisation vers l'habitacle est une section de sortie centrale (113a, 113b) et en ce que la conduite additionnelle de sortie (210) communique avec la section de sortie centrale (113a, 113b).

4. Système de chauffage, ventilation et/ou climatisation (10) selon la revendication 3, dans lequel le système de chauffage, ventilation et/ou climatisation (10) comprend des moyens de commande propres à agencer les moyens principaux de distribution (132a, 132b, 133a, 133b, 134a, 134b) dans une configuration de distribution donnée et les moyens additionnels de distribution (212a, 212b, 213a, 213b) dans une position d'ouverture de la distribution du flux d'air de climatisation hors de l'habitacle.

5. Système de chauffage, ventilation et/ou climatisation (10) selon la revendication 4, dans lequel le boîtier de chauffage, ventilation et/ou climatisation (100) comprend au moins une section de sortie de pied (114a, 114b) et en ce que la configuration de distribution donnée est telle que les moyens principaux de distribution sont aptes à fermer la section de sortie de pied (114a, 114b) et à ouvrir la section de sortie centrale (113a, 113b).

6. Système de chauffage, ventilation et/ou climatisation (10) selon la revendication 5, dans lequel le boîtier de chauffage, ventilation et/ou climatisation (100) comprend au moins une section de sortie latérale (112a, 112b) et en ce que la configuration de distribution donnée est telle que les moyens principaux de distribution (132a, 132b, 133a, 133b, 134a, 134b) sont aptes à ouvrir la section de sortie latérale (112a, 112b) et en ce que les moyens additionnels de distribution (212a, 212b) sont aptes à fermer la section de sortie latérale (112a, 112b).

7. Système de chauffage, ventilation et/ou climatisation (10) selon l'une quelconque des revendications précédentes, dans lequel le système de chauffage, ventilation et/ou climatisation (10) comporte des moyens de commande aptes à commander les moyens principaux de distribution (132a, 132b, 133a, 133b, 134a, 134b) et les moyens additionnels de distribution (212a, 212b, 213a, 213b) de manière à, simultanément ou consécutivement, fermer la distribution du flux d'air de climatisation à l'intérieur de l'habitacle et ouvrir la distribution du flux d'air de climatisation hors de l'habitacle, et inversement.

## Patentansprüche

1. Heizungs-, Lüftungs- und/oder Klimaanlage (10) eines Kraftfahrzeugs, die ein Heizungs-, Lüftungs-und/oder Klimatisierungsgehäuse (100) enthält, das die Wärmebehandlung eines Klimatisierungsluftstroms erlauben kann, der dazu bestimmt ist, eine gewünschte Temperatur innerhalb des Innenraums aufrechtzuerhalten, wobei das Heizungs-, Lüftungs- und/oder Klimatisierungsgehäuse (100) Hauptverteilungseinrichtungen (132a, 132b, 133a, 133b, 134a, 134b) der Klimatisierungsluft innerhalb des Innenraums des Fahrzeugs aufweist, um eine begrenzte Anzahl von Verteilungskonfigurationen zu definieren,
wobei die Heizungs-, Lüftungs- und/oder Klimaanlage (10) ein zusätzliches Modul (200) enthält, das zusätzliche Verteilungseinrichtungen (212a, 212b, 213a, 213b) des Klimatisierungsluftstroms nach außerhalb des Innenraums aufweist, und das zusätzliche Modul (200) mindestens eine zusätzliche Austrittsleitung (210) von Klimatisierungsluft nach außerhalb des Innenraums des Fahrzeugs hinaus enthält, wobei das Heizungs-, Lüftungs- und/oder Klimatisierungsgehäuse (100) mindestens einen Hauptaustrittsabschnitt (112a, 112b, 113a, 113b, 114a, 114b) von Klimatisierungsluft zum Innenraum enthält, wobei die zusätzliche Austrittsleitung (210) mit dem Hauptaustrittsabschnitt (112a, 112b, 113a, 113b, 114a, 114b) von Klimatisierungsluft zum Innenraum in Verbindung steht,
**dadurch gekennzeichnet, dass** die zusätzlichen Verteilungseinrichtungen (212a, 212b, 213a, 213b) den über den Hauptaustrittsabschnitt (112a, 112b, 113a, 113b, 114a, 114b) austretenden Klimatisierungsluftstrom zur zusätzlichen Leitung (210) und/oder zu mindestens einem Diffusor (122a, 122b, 123a, 123b, 124a, 124b) lenken können, der in den Innenraum mündet.

2. Heizungs-, Lüftungs- und/oder Klimaanlage (10) nach Anspruch 1, wobei die Hauptverteilungseinrichtungen (132a, 132b, 133a, 133b, 134a, 134b) das Öffnen und/oder Schließen des Hauptaustrittsabschnitts (112a, 112b, 113a, 113b, 114a, 114b) steuern können.

3. Heizungs-, Lüftungs- und/oder Klimaanlage (10) nach einem der Ansprüche 1 bis 2, wobei der Hauptaustrittsabschnitt von Klimatisierungsluft zum Innenraum ein zentraler Austrittsabschnitt (113a, 113b) ist, und die zusätzliche Austrittsleitung (210) mit dem zentralen Austrittsabschnitt (113a, 113b) in Verbindung steht.

4. Heizungs-, Lüftungs- und/oder Klimaanlage (10) nach Anspruch 3, wobei die Heizungs-, Lüftungs-und/oder Klimaanlage (10) Steuereinrichtungen enthält, die geeignet sind, die Hauptverteilungseinrichtungen (132a, 132b, 133a, 133b, 134a, 134b) in einer gegebenen Verteilungskonfiguration und die zusätzlichen Verteilungseinrichtungen (212a, 212b, 213a, 213b) in einer Öffnungsstellung der Verteilung des Klimatisierungsluftstroms nach außerhalb des Innenraumes anzuordnen.

5. Heizungs-, Lüftungs- und/oder Klimaanlage (10) nach Anspruch 4, wobei das Heizungs-, Lüftungs-und/oder Klimatisierungsgehäuse (100) mindestens einen Fußaustrittsabschnitt (114a, 114b) enthält, und die gegebene Verteilungskonfiguration so ist, dass die Hauptverteilungseinrichtungen den Fußaustrittsabschnitt (114a, 114b) schließen und den zentralen Austrittsabschnitt (113a, 113b) öffnen können.

6. Heizungs-, Lüftungs- und/oder Klimaanlage (10) nach Anspruch 5, wobei das Heizungs-, Lüftungs-und/oder Klimatisierungsgehäuse (100) mindestens einen seitlichen Austrittsabschnitt (112a, 112b) enthält und die gegebene Verteilungskonfiguration so ist, dass die Hauptverteilungseinrichtungen (132a, 132b, 133a, 133b, 134a, 134b) den seitlichen Austrittsabschnitt (112a, 112b) öffnen und die zusätzlichen Verteilungseinrichtungen (212a, 212b) den seitlichen Austrittsabschnitt (112a, 112b) schließen können.

7. Heizungs-, Lüftungs- und/oder Klimaanlage (10) nach einem der vorhergehenden Ansprüche, wobei die Heizungs-, Lüftungs- und/oder Klimaanlage (10) Steuereinrichtungen aufweist, die die Hauptverteilungseinrichtungen (132a, 132b, 133a, 133b, 134a, 134b) und die zusätzlichen Verteilungseinrichtungen (212a, 212b, 213a, 213b) so steuern können, dass gleichzeitig oder nacheinander die Verteilung des Klimatisierungsluftstroms innerhalb des Innenraums geschlossen und die Verteilung des Klimatisierungsluftstroms nach außerhalb des Innenraums geöffnet wird und umgekehrt.

## Claims

1. Heating, ventilation and/or air conditioning system (10) for a motor vehicle, comprising a heating, ventilation and/or air conditioning housing (100) able to allow heat treatment of a flow of air conditioning air intended to maintain a desired temperature inside the vehicle interior, the heating, ventilation and/or air conditioning housing (100) comprising main distribution means (132a, 132b, 133a, 133b, 134a, 134b) for distributing the air conditioning air inside the vehicle interior so as to define a limited number of distribution configurations,
the heating, ventilation and/or air conditioning system (10) comprising an additional module (200) comprising additional distribution means (212a, 212b, 213a, 213b) for distributing the flow of air conditioning air outside the vehicle interior and the additional module (200) comprising at least one additional outlet pipe (210) letting the air conditioning air out of the vehicle interior, the heating, ventilation and/or air conditioning housing (100) comprising at least one main outlet section (112a, 112b, 113a, 113b, 114a, 114b) for letting air conditioning air out into the vehicle interior, the additional outlet pipe (210) communicating with the main outlet section (112a, 112b, 113a, 113b, 114a, 114b) letting air conditioning air out into the vehicle interior,
**characterized in that** the additional distribution means (212a, 212b, 213a, 213b) are able to direct the flow of air conditioning air leaving through the main outlet section (112a, 112b, 113a, 113b, 114a, 114b) towards the additional pipe (210) and/or towards at least one diffuser (122a, 122b, 123a, 123b, 124a, 124b) opening into the vehicle interior.

2. Heating, ventilation and/or air conditioning system (10) according to Claim 1, in which the main distribution means (132a, 132b, 133a, 133b, 134a, 134b) are able to command the opening and/or closing of the main outlet section (112a, 112b, 113a, 113b, 114a, 114b).

3. Heating, ventilation and/or air conditioning system (10) according to either one of Claims 1 and 2, in which the main outlet section for letting air conditioning air out into the vehicle interior is a central outlet section (113a, 113b) and in that the additional outlet pipe (210) communicates with the central outlet section (113a, 113b).

4. Heating, ventilation and/or air conditioning system (10) according to Claim 3, in which the heating, ventilation and/or air conditioning system (10) comprises control means capable of arranging the main distribution means (132a, 132b, 133a, 133b, 134a, 134b) in a given distribution configuration and the additional distribution means (212a, 212b, 213a, 213b) in a position opening the distribution of the flow of air conditioning air out of the vehicle interior.

5. Heating, ventilation and/or air conditioning system (10) according to Claim 4, in which the heating, ventilation and/or air conditioning housing (100) comprises at least one feet outlet section (114a, 114b) and in that the given distribution configuration is such that the main distribution means are able to close the feet outlet section (114a, 114b) and to open the central outlet section (113a, 113b).

6. Heating, ventilation and/or air conditioning system (10) according to Claim 5, in which the heating, ventilation and/or air conditioning housing (100) comprises at least one lateral outlet section (112a, 112b) and in that the given distribution configuration is such that the main distribution means (132a, 132b, 133a, 133b, 134a, 134b) are able to open the lateral outlet section (112a, 112b) and in that the additional distribution means (212a, 212b) are able to close the lateral outlet section (112a, 112b).

7. Heating, ventilation and/or air conditioning system (10) according to any one of the preceding claims, in which the heating, ventilation and/or air conditioning system (10) comprises control means able to control the main distribution means (132a, 132b, 133a, 133b, 134a, 134b) and the additional distribution means (212a, 212b, 213a, 213b) in such a way as to, simultaneously or consecutively, close the distribution of the flow of air conditioning air inside the vehicle interior and open the distribution of the flow of air conditioning air outside the vehicle interior, and vice versa.
